(19)

Europäisches
Patentamt

European
Patent Office

Office européen
des brevets

(11) **EP 4 517 262 A1**

(12) **EUROPEAN PATENT APPLICATION**

(43) Date of publication:
**05.03.2025 Bulletin 2025/10**

(21) Application number: **24193638.4**

(22) Date of filing: **08.08.2024**

(51) International Patent Classification (IPC):
**G01C 21/20** (2006.01)     **G06T 7/73** (2017.01)

(52) Cooperative Patent Classification (CPC):
**G01C 21/20; G01C 21/005; G06T 7/74;**
G06T 2207/30244

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.08.2023 IN 202311058474
16.10.2023 US 202318487653**

(71) Applicant: Honeywell International Inc.
**Charlotte, NC 28202 (US)**

(72) Inventors:
• **TSAI, Jack**
  **Charlotte, 28202 (US)**
• **FISHER, Zachary**
  **Charlotte, 28202 (US)**
• **GUPTA, Nikhil**
  **Charlotte, 28202 (US)**
• **VENKATARAMAN, Vijay**
  **Charlotte, 28202 (US)**

(74) Representative: **Haseltine Lake Kempner LLP**
**Cheapside House**
**138 Cheapside**
**London EC2V 6BJ (GB)**

(54) **UNIFIED VISUAL LOCALIZATION ARCHITECTURE**

(57)     Systems and methods for providing a unified visual localization architecture are described herein. In some implementations, a system includes an image acquisition device mounted to an object, the image acquisition device configured to acquire a query frame of an environment containing the object. The system also includes a memory device configured to store an image database. Further, the system includes at least one processor configured to execute computer-readable instructions that direct the at least one processor to identify a set of data in the image database that potentially matches the query frame; identify a vision localization paradigm in a plurality of vision localization paradigms; and determine a pose for the object using the set of data, the query frame, and lens characteristics for the image acquisition device as inputs to the vision localization paradigm.

FIG. 4

**Description**

CROSS-REFERENCE TO RELATED APPLICATIONS

This application claims benefit of India Provisional Application No. 202311058474 filed on August 31, 2023, and titled "UNIFIED VISUAL LOCALIZATION ARCHITECTURE", the contents of which are incorporated herein in their entirety.

BACKGROUND

Many vehicles are built with navigation systems that attempt to determine the position and attitude of the vehicle. Typically, navigation systems acquire information about the position and attitude of a vehicle from one or more sensors or receivers mounted to the vehicle. The navigation system receives navigational data about the vehicle's position or environment that the navigation system uses to determine the position and attitude of the vehicle. For example, a navigation system may include inertial sensors and global navigation satellite system receivers, among other sensors that provide or receive information. Further, some sensors used by a navigation system may be image sensors.

SUMMARY

Systems and methods for providing a unified visual localization architecture are described herein. In some implementations, a system includes an image acquisition device mounted to an object, the image acquisition device configured to acquire a query frame of an environment containing the object. The system also includes a memory device configured to store an image database. Further, the system includes at least one processor configured to execute computer-readable instructions that direct the at least one processor to identify a set of data in the image database that potentially matches the query frame. Additionally, the computer-readable instructions direct the at least one processor to identify a vision localization paradigm in a plurality of vision localization paradigms. Moreover, the computer-readable instructions direct the at least one processor to determine a pose for the object using the set of data, the query frame, and lens characteristics for the image acquisition device as inputs to the vision localization paradigm.

BRIEF DESCRIPTION OF THE DRAWINGS

Drawings accompany this description and depict only some embodiments associated with the scope of the appended claims. Thus, the described and depicted embodiments should not be considered limiting in scope. The accompanying drawings and specification describe the exemplary embodiments, and features thereof, with additional specificity and detail, in which:

FIG. 1 is a block diagram illustrating a system implementing a unified visual localization architecture according to an aspect of the present disclosure;

FIG. 2 is a block diagram illustrating a system for preparing data for storage in an image database according to an aspect of the present disclosure;

FIG. 3 is a flowchart diagram illustrating a method for performing vision localization within a unified architecture according to an aspect of the present disclosure;

FIG. 4 is a block diagram illustrating a unified visual localization architecture according to an aspect of the present disclosure;

FIG. 5 is a block diagram illustrating a candidate image identifier according to an aspect of the present disclosure;

FIG. 6 is a block diagram illustrating a vision localization paradigm implementing fine matching according to an aspect of the present disclosure;

FIGs. 7A and 7B are diagrams illustrating the application of a homography matrix when performing a validity check within a vision localization paradigm according to an aspect of the present disclosure;

FIG. 8 is a block diagram illustrating a vision localization paradigm using point clouds according to an aspect of the present disclosure;

FIG. 9 is a block diagram illustrating a vision localization paradigm implementing neural rendering according to an aspect of the present disclosure;

FIG. 10 is a block diagram illustrating a vision localization paradigm implementing learned depth according to an aspect of the present disclosure;

FIG. 11 is a block diagram illustrating a vision localization paradigm implementing pose approximation according to an aspect of the present disclosure;

FIG. 12 is a block diagram illustrating a vision localization paradigm implementing geometric transformations according to an aspect of the present disclosure; and

FIG. 13 is a flowchart diagram illustrating a method for performing vision localization within a unified architecture according to an aspect of the present disclosure.

Per common practice, the drawings do not show the various described features according to scale, but the drawings show the features to emphasize the relevance of the features to the example embodiments.

DETAILED DESCRIPTION

The following detailed description refers to the accompanying drawings that form a part of the present specification. The drawings, through illustration, show specific illustrative embodiments. However, it is to be understood that other embodiments may be used and that logical, mechanical, and electrical changes may be made.

Systems for implementing a unified vision localization architecture and methods for using a unified vision localization architecture are described herein. For example, a navigation system attached to an object includes an image acquisition device that acquires a query frame representation of the environment. Further, the navigation system may include a database of images, where the images in the database depict scenes representing potential environments of the object. The navigation system uses the database of images and the acquired query frame to identify a set of potential candidate images in the database of images, where the set of potential candidate images potentially matches the data captured in the query frame. Upon identifying the set of potential candidate images, the system may select and implement one or more vision localization paradigms based on the operational context of the object. The system uses the query image and the set of potential candidate images as inputs for the selected vision localization paradigm to localize the object within the environment.

A vision localization system can estimate a camera location from an acquired image. Often, the vision localization system is part of an object with a mounted image capture device, where the image capture device produces query images depicting a scenic representation of the environment of the object. With the acquired query image, the vision localization system can compare the query image against a previously acquired image depicting the environment, where the previously acquired image is associated with a known geographic position. Based on the comparison, information describing the characteristics of the image capture device, and the relationship of the image capture device to the object, the vision localization system can determine pose information for the object.

When the vision localization system attempts to determine the pose information, the vision localization system may select from multiple different vision localization paradigms for identifying the pose of the object. However, the different vision localization paradigms are not equivalent to one another. In particular, the paradigms may have different benefits and drawbacks. For example, some paradigms may provide more accurate solutions, and others may be more quickly performed; some paradigms might operate on two-dimensional data, while others may use three-dimensional data.

Because of the different benefits and drawbacks of the different paradigms, some paradigms are better suited for different operational contexts of a vision localization system. For example, a vision localization system may implement a paradigm offering the requisite accuracy for situations requiring accuracy. Alternatively, a vision localization system may implement a faster paradigm where speed of operation concerns outweigh the need for accuracy. In another example, some objects may operate in high altitudes, where the image capture device acquires images of the ground below. Due to the high altitude, the acquired images may appear as two-dimensional frames of data. However, as the object moves closer to the ground, the environment can provide increasingly three-dimensional data.

In certain embodiments, a vision localization system unifies the different paradigms within a single vision localization architecture. In particular, a unified vision localization architecture may implement several paradigms within a navigation system that can determine the pose of an object based on comparisons of acquired query images against retrieved image data. Thus, the navigation system can perform a vision localization paradigm that is suited for a particular operational context of an obj ect.

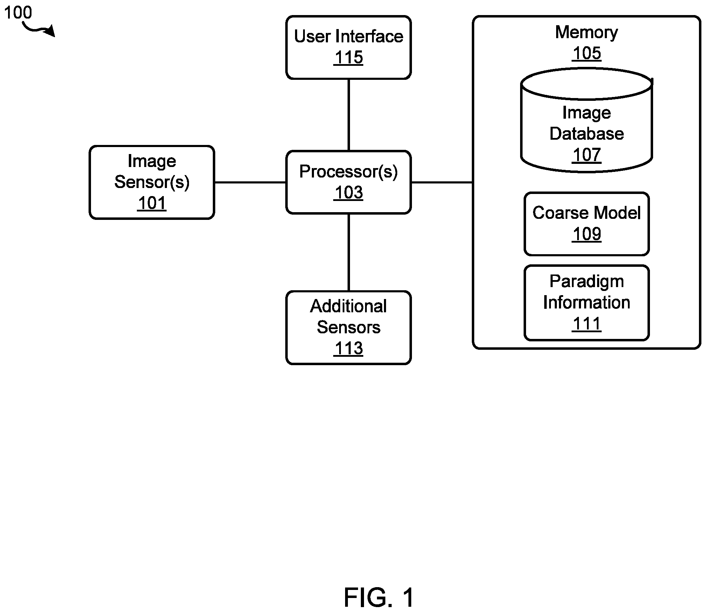

FIG. 1 is a block diagram illustrating a potential navigation system 100 that implements a unified vision localization architecture. For example, the navigation system 100 includes one or more image sensors 101 (also referred to herein as an image acquisition device), one or more processors 103, and a memory 105. Further, the memory 105 may store an image database 107, a coarse model 109, and paradigm information 111. In some alternative embodiments, the navigation system 100 may include additional sensors 113 and a user interface 115. As described herein, a user interface 115 may be any device capable of receiving user input and converting it to data that can be processed by the processor 103 and displaying information from the navigation system 100 to a user. Examples of the user interface 115 include a monitor, touch screen, smartphone, microphone, keyboards, mice, etc.

In certain embodiments, the navigation system 100 may be securely mounted to an object. The object may be any object that is capable of movement or being moved. For example, the object may be a vehicle like an aircraft, a train, an automobile, a boat, a spacecraft, etc. When the object is a vehicle, the vehicle may be manned or unmanned. Further, the object may be a personal electronic device or other object capable of being moved.

In exemplary embodiments, the navigation system 100 is mounted to the object in a known positional relationship. The known positional relationship allows the navigation system 100 to derive the pose of the object from the detected position and attitude of sensors (i.e., image sensors 101 and additional sensors 113) on the navigation system 100. For example, the navigation system 100 capably determines the pose of the object in up to six degrees of freedom with respect to a particular reference frame. When the reference frame is the Earth reference frame, the navigation system 100 may determine the latitude, longitude, and altitude of the object. Additionally, where applicable to an object, the navigation system 100 may determine the attitude of the object, like the yaw, pitch, and roll.

In further embodiments, the image sensor 101 may be a device that acquires image data from an environment surrounding the navigation system 100. For example, the image sensor 101 may be a camera, a depth camera, a LiDAR, or other image acquisition device. The image sensor 101 may acquire image data as query frames of image data. The image sensor 101 may be coupled to the one or more processors 103, the image sensor 101 providing the acquired image data to the one or more processors 103.

In exemplary embodiments, the processor 103 receives acquired image data (query frames) from the image sensor 101 and executes instructions that cause the processor 103 to execute a unified vision localization architecture. The processor 103 may be a computational device (such as a general-purpose processor, multi-core processor, multiple processors, dedicated circuitry, and the like). The functions performed by the processor 103 may be implemented using software, firmware, hardware, or any appropriate combination thereof. The processor 103 and other computational devices may be supplemented by, or incorporated in, specially designed application-specific integrated circuits (ASICs) or field programmable gate arrays (FPGAs). The processor 103 and other computational devices can also include or function with software programs, firmware, or other computer-readable instructions for performing various process tasks, calculations, and control functions used in the present methods and systems.

The present methods may be implemented by computer-executable instructions, such as program modules or components executed by the processor 103 or other computational devices. Generally, program modules include routines, programs, objects, data components, data structures, algorithms, and the like, which perform particular tasks or implement particular abstract data types.

The memory may be any suitable computer-readable storage media that includes, for example, non-volatile memory devices, including semiconductor memory devices such as random access memory (RAM), read-only memory (ROM), electrically erasable programmable ROM (EEPROM), or flash memory devices; magnetic disks such as internal hard disks or removable disks; optical storage devices such as compact discs (CDs), digital versatile discs (DVDs), Blu-ray discs, or other media that can carry or store desired program code as computer-executable instructions or data structures.

In certain embodiments, the processor 103 may be additionally coupled to the memory 105, where the memory 105 stores information that the processor 103 uses to determine pose information from the acquired image data from the image sensor 101. For example, in addition to computer-readable instructions, the memory 105 stores an image database 107. The image database 107 is a database of images received from a central repository of image data. The image database may include image data of the environment through which the navigation system 100 travels. For example, when the object is an aircraft, the image data may include overlapping, tiled satellite images of the surface of the earth over which the aircraft may travel. Additionally, the overlapping, tiled satellite images may be augmented by three-dimensional information. Further, the image database 107 may also include three-dimensional point cloud information of environments an object can navigate.

In further embodiments, for each image in the image database 107, the image database 107 may include pre-calculated coarse descriptors. For example, for the coarse descriptors, the image database 107 may store a general descriptor for each image in the image database 107. Additionally, the image database 107 may store other descriptors that support the performance of the various paradigms provided by the navigation system 100. For example, the image database 107 may include point cloud information, feature descriptors, and other descriptors that support the performance of the various paradigms by the navigation system 100.

In further embodiments, the navigation system 100 acquires the information in the image database 107 from a central repository, such as an operations center, data center, or other location. Alternatively, the navigation system 100 may generate image information during normal operation and store the generated image information in the image database 107 for future use. When the navigation system 100 acquires the information from another system, the navigation system 100 may receive the information for storage in the image database 107 through an established wireless or wired communication channel between the navigation system 100 and the other system. Alternatively, when the navigation system 100 is remotely located from the central repository, the image data can be sent to another computer near the navigation system 100 for installation onto the navigation system 100, either by using a computer-readable medium or through a wireless or wired communication channel.

In certain embodiments, during operation, the image sensor 101 acquires a frame of image data (referred to as the "query frame") and provides the query frame to the processor 103. Upon reception of the query frame, the processor 103 prepares the query frame for comparison to the image data in the image database 107. To prepare the query frame for comparison, the processor 103 may execute a coarse model 109 to determine a series of coarse descriptors for the query frame. For example, the coarse model 109 may generate a general descriptor for the query frame. In some implementations, the general descriptor may be a vector of values generated from the query frame. In some implementations, the coarse model 109 may be a machine learning model that calculates a general descriptor comparable to coarse descriptors of the image data stored in the image database 107. In some implementations, the coarse model 109 may be the same model used to create the pre-calculated coarse descriptors stored in the image database 107. Alternatively, the coarse model 109 may be a different model that produces comparable descriptors to the coarse descriptors stored in the image database 107 for the image data.

Further, the memory 105 may also store paradigm information 111. The paradigm information 111 may enable the processor 103 to prepare the query frame for comparison to data in the image database within a selected vision localization paradigm. For example, the paradigm information 111 may identify features using a feature identification algorithm. In some implementations, the paradigm information 111 may be a fine model that receives the query frame as an input and generates fine descriptors for the input query frame. The paradigm information 111 may include machine learning models that calculate descriptors comparable to the descriptors of the image data stored in the image database 107 for the different vision localization paradigms. In some implementations, the same models can be used to generate paradigm-specific descriptors for the query image that was used to generate any pre-calculated descriptors for the associated paradigms of the image data stored in the image database 107. Alternatively, different models may produce the paradigm-specific descriptors for the query image from those used to produce the comparable descriptors of the image data stored in the image database 107.

In some embodiments, the navigation system 100 acquires the coarse model 109 and the paradigm information 111 from the central repository that provided the image data in the image database when the navigation system 100 acquired the image data. Alternatively, when the coarse model 109 and the paradigm information 111 are substantially static, the coarse model 109 and the paradigm information 111 may be loaded onto the memory 105 before the initial operation of the navigation system 100. However, some of the paradigm information 111 may be acquired with the image data or before the initial operation of the navigation system 100. When the coarse model 109 and the paradigm information 111 need to be updated or reinstalled in the memory 105, the navigation system 100 may acquire the coarse model 109 and the paradigm information 111 through a wireless or wired communication channel with the central repository. Alternatively, when the navigation system 100 is remotely located from the central repository, the coarse model 109 and the paradigm information 111 can be sent to another computer near the navigation system 100 for installation onto the navigation system 100, either by using a computer-readable medium or through a wireless or wired communication channel.

In certain embodiments, when the processor 103 determines the coarse descriptors for the query frame by executing the coarse model 109 using the query frame as an input, the processor 103 may compare the coarse descriptors against the coarse descriptors for the image data stored in the image database 107. The processor 103 then identifies a subset of images in the image database 107 that are the closest matching to the query frame based on the comparison of the coarse descriptors. For example, the processor 103 may take the dot product of the coarse or global descriptors for the query frame with the global descriptor for each image or a subset of the images in the image database 107. Based on the result of the dot products, the processor 103 may identify a number of coarsely matching images in the image database 107 that best match the query frame. For example, the processor 103 may identify the twenty (or other number) best matching images based on the dot product of the coarse descriptors. The number of coarsely matching images may be predefined or dynamically selected based on the situation of the navigation system 100

In some embodiments, the number of coarsely matching images in the image database 107 identified as best matching may be adjustable. For example, a user may communicate with the processor 103 through a user interface 115 to control the number of images selected. Alternatively, the number of images selected from the image database 107 may be preconfigured or controlled by another external system. By identifying a set of coarsely matching images, non-matching images can be excluded from additional processing, increasing the processing speed because the set of coarsely matching images is processed in contrast to processing all (or a substantial number of) images in the image database 107.

In certain embodiments, when the processor 103 has selected the coarsely matching images, the processor 103 may then execute one or more of multiple vision localization paradigms to identify a pose for the object associated with the navigation system 100. The processor 103 determines which paradigms to perform based on the operational context of the object and navigation system. For example, certain paradigms are better suited to certain operational contexts. For example, the operational context may call for quicker pose calculations, more accurate pose calculations, operation in a two-dimensional environment, or operation in a three-dimensional environment. The processor 103 may identify the paradigm for a certain operational context by receiving a paradigm selection from a user through the user interface 115. Alternatively, the processor 103 may receive a paradigm selection from another system in communication with the navigation system 100. Additionally, the processor 103 may acquire information from additional sensors 113, allowing the processor 103 to determine aspects of the operational context.

In some embodiments, as mentioned above, the navigation system 100 may include additional sensors 113. The additional sensors 113 include sensors that provide information that the processor 103 can use to determine position, attitude, heading, and altitude. For example, the additional sensors 113 may include inertial measurement units, GPS receivers, barometers, magnetometers, altimeters, etc. The additional sensors provide measurements of the motion of the object or environmental information that the processor 103 uses to calculate the navigational information for the object. The processor 103 may use the navigational information to identify the operational context for selecting the paradigm. Also, the processor 103 may use the navigational information to increase the efficiency of performing the selected paradigms.

As described above, identifying a set of potential matching images from the database, selecting a paradigm for vision localization, and performing the selected vision localization using the set of potential matching images enables a unified vision localization architecture. In such an architecture, the processor 103 may execute a vision localization paradigm suitable to the operational context of the navigation system 100 within a single system. Thus, the navigation system 100 is usable by a wider range of systems, and the navigation system 100 can provide vision localization information in a wider range of environments and for a wider range of purposes.

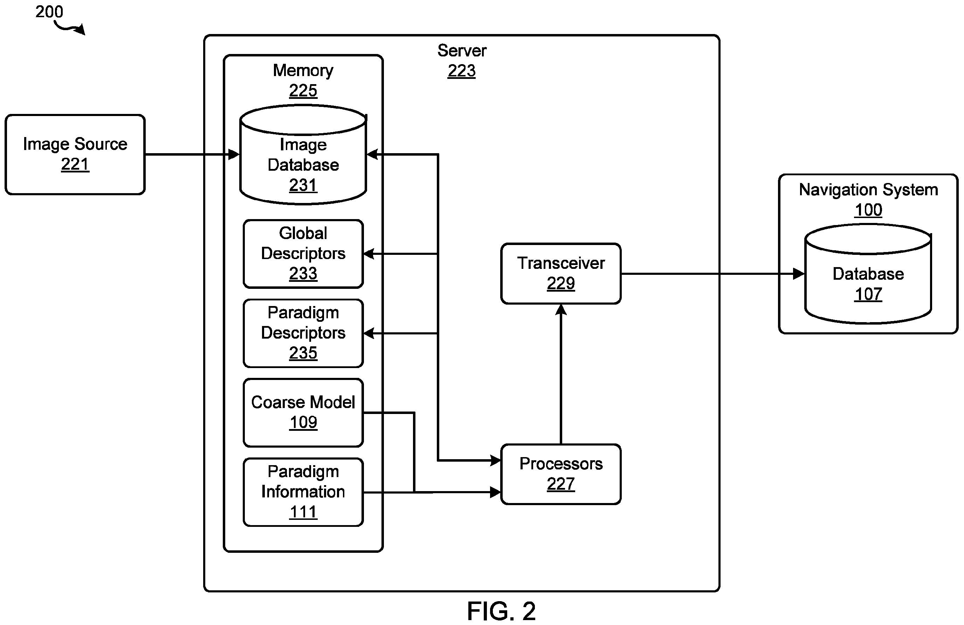

FIG. 2 is a block diagram of a system 200 for preparing an image database for use by a system, such as the navigation system 100, that can provide vision localization using multiple vision localization paradigms within a unified vision localization architecture. As illustrated, the system 200 includes an image source 221 and a server 223. The server 223 acquires images from the image source 221 and prepares the image information for storage in the image database 107 on the navigation system 100. To prepare the images for storage in the image database 107, the server 223 may include a memory 225, one or more processors 227, and a transceiver 229.

In certain embodiments, the image source 221 may be any source of image data captured over a region. For example, the image data may be satellite imagery acquired from a third party, such as USGS NAIP or USGS HRO images. Alternatively, the image data may include point clouds acquired using lidar (or other three-dimensional vision acquisition devices) for a particular region. Also, the image data may include multiple images taken of a particular environment, which can also be used to create three-dimensional point clouds or in other pose estimation algorithms.

In exemplary embodiments, the server 223 processes the image data, so the image data is suitable for comparison to query frames using different paradigms. For example, the server 223 may receive USGS satellite image data covering approximately 12,000 square kilometers. The server 223 may process the images to create tiles with fifty percent overlap at five scaling levels. The server 223 may save both the received images from the image source 221 and the processed image tiles within an image database 231 on the memory 225. In an additional implementation, the server 223 may acquire multiple overlapping images of an environment that the processor 227 can process to create point clouds for a particular environment. For example, the processor 227 may implement a structure-from-motion (SFM) algorithm to create a three-dimensional point cloud for an environment. The processor 227 may store the generated point clouds in the memory 225. Further, the processor 227 may store images and LiDAR data acquired from the image source 221 along with location information associated with the acquired image data in the image database 231 on the memory 225.

In additional embodiments, when the processor 227 creates different tiles of image data, the processor 227 may calculate additional vertical information such that the tiles of image data contain three-dimensional data. For example, when the tiles of image data are geographical images, the processor 227 may identify vertical geographical information (terrain height) for the tiles of image data. The processor 227 may use terrain height information provided by the USGS space shuttle tomography (STRM) database or the USGS national 3D elevation program (3DEP) database to determine the terrain height of features in the tiles of image data. When the terrain height has been applied to the tiles of image data, the processor 227 may store the three-dimensional tiles in the image database 231.

The memory 225 may function similarly to the memory 105, described above, except that the memory 225 stores more and different types of information. As processing the acquired images from the image source 221 may be a computationally intense task, the server 223 may be a supercomputer having a processor 227 with multiple cores or multiple processors 227. A processor 227 may function similarly to the processor 103 described above, except that the processor 227 may include more processors and process different data types.

In some embodiments, the processor 227 may also calculate descriptors for the tiles of image data stored in the image database 231. Pre-calculating the descriptors on the server 223 may relieve the computational load on the navigation system 100 and increase the speed at which the navigation system 100 can determine a pose for an object. To pre-calculate the descriptors, the processor 227 may execute the coarse model 109 and the paradigm information 111 described above in connection with FIG. 1 on the images in the image data. In some implementations, the coarse model 109 and the paradigm information 111 stored in the memory 225 may not be identical to the coarse model 109 and the paradigm information 111 stored in the memory 105 of FIG. 1.

As described above, the execution of the coarse model 109 produces global descriptors for image data. The processor 227 may store the produced global descriptors in the memory 225 as global descriptors 233. Further, the execution of the paradigm information 111 produces paradigm specific descriptors for the image data. The processor 227 may store the produced descriptors in the memory 225 as paradigm descriptors 235.

When the descriptors are generated and the image data is prepared, the processor 227 may transmit the image data described above in FIG. 1 to the navigation system 100 for storage in the image database 107 through the transceiver 229. For example, the processor 227 may send all or a portion of the tiles of three-dimensional image data to the navigation system 100 or point clouds associated with an expected environment of the navigation system 100. Also, the processor 227 may send the global descriptors 233 and the paradigm descriptors 235 associated with the sent image data to the navigation system 100. In some implementations, the processor 227 may also send the coarse model 109 and the paradigm information 111 to the navigation system 100 for use when calculating descriptors for acquired query frames. Thus, the server 223 may provide information that enables the navigation system 100 to perform multiple vision localization paradigms as described above in connection with FIG. 1.

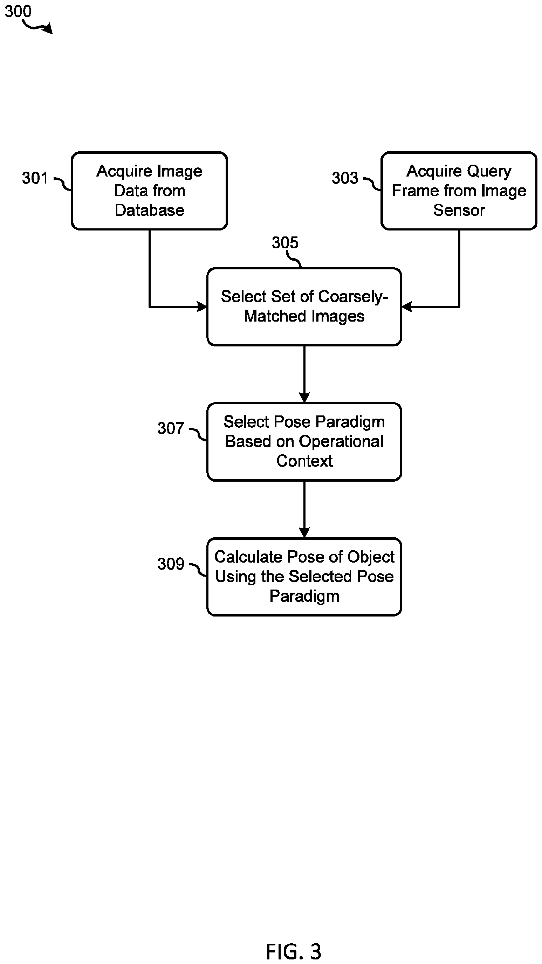

FIG. 3 is a flowchart diagram of a method 300 for performing one of multiple vision localization paradigms within a unified vision localization architecture. The steps of method 300 are described herein with reference to the items described above in relation to FIG. 1. Method 300 proceeds at 301, where images are acquired from a database. For example, the processor 103 may acquire images from the image database 107, wherein the images are associated with particular locations. Additionally, the processor 103 may acquire general and paradigm descriptors for the image data stored in the image database 107. Further, the method 300 proceeds at 303, where a query frame is acquired from an image sensor. For example, the processor 103 may acquire a query frame from the image sensor 101.

In certain embodiments, when the processor 103 has acquired the query frame and the images from the image database 107. The method 300 proceeds at 305, where a set of coarsely matched images is selected. For example, the processor 103 uses the coarse model 109 to generate general descriptors for the query frame, and the processor 103 compares the query frame general descriptors against general descriptors for the images in the image database 107. Based on the comparison, the processor 103 identifies a set of coarsely matched images. When the processor 103 has identified the set of coarsely matched images, the method 300 proceeds at 307, where a vision localization paradigm is selected based on operational context. For example, the processor 103 may receive instructions from a user to select a vision localization paradigm, or the processor 103 may select a vision localization paradigm based on a detected operational context. When the vision localization paradigm is selected, the method 300 proceeds at 309, where a pose of the object is calculated using the selected vision localization paradigm.

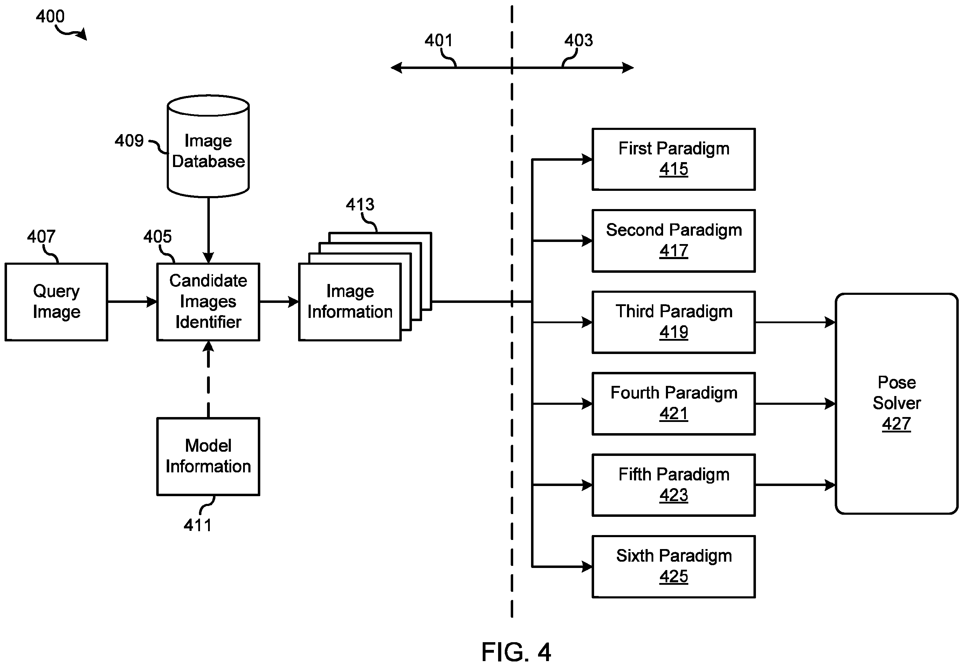

FIG. 4 is a block diagram illustrating a multiple vision localization paradigm architecture 400. As illustrated, the architecture 400 may include a common frontend 401 and a paradigm execution section 403. The common frontend 401 provides image information 413 as an output that the paradigm execution section 403 can use to identify a pose. Further, the common frontend 401 may be agnostic regarding the paradigm selected by the paradigm execution section 403. The paradigm execution section 403 performs the selected vision localization paradigm to determine the pose and other vision localization tasks using the provided image information 413 from the common frontend 401.

In certain embodiments, the common frontend 401 includes a candidate images identifier 405. The candidate images identifier 405 is a function performed by the processor 103 to reduce the number of images used by the selected paradigm so that the paradigm may quickly calculate the pose of the object. Without reducing the number of images to be used by the selected paradigm, the selected paradigm may perform the vision localization on the body of image data stored in the image database, which could take an unduly long time. Thus, the candidate images identifier 405 provides a faster mechanism for the multiple vision localization paradigm architecture 400 to reduce the number of images provided as part of the image information 413 to the paradigm execution section 403, such that the paradigm execution section 403 can quickly calculate the pose of an object.

The candidate images identifier 405 may receive several inputs to create the image information 413. For example, the candidate images identifier 405 may receive a query frame 407, image data from the image database 409, and model information 411. The candidate images identifier 405 may compare the query frame 407 against the image data in the image database 409 to identify a subset of the images. Further, the candidate images identifier 405 may also use the model information 411 to convert the data in the subset of images to be suitable for the potential vision-based localizations executed within the paradigm execution section 403.

The candidate images identifier 405 receives a query frame 407 from the image sensor 101 to identify the subset of images that potentially match the query frame 407. The candidate images identifier 405 then calculates a query coarse descriptor for the query frame 407 and compares the query coarse descriptor against a database coarse descriptor for a large set of image data stored in the image database 409. The candidate images identifier 405 selects a defined number of best-matching images from the image database 409. In some implementations, after identifying the best-matching images, the candidate images identifier 405 may apply the model information 411 to the best-matching images and the query frame 407 to generate representations of the query frame 407 and the best-matching images that are suitable as inputs for the potential paradigms executed within the paradigm execution section 403. For example, the model information 411 may cause the candidate images identifier 405 to generate local descriptors for the best-matching images and the query frame 407, to combine images in the best-matching images, to generate point clouds, to perform feature identification, and the like. In alternative implementations, the generation of representations of the query frame 407 and the best matching images used as inputs for a particular paradigm may be performed by the associated paradigm within the paradigm execution section 403.

In certain embodiments, after the candidate images identifier 405 has received the query frame 407 and selected the best matching images from the image database 409, the candidate images identifier 405 may provide the information to the paradigm execution section 403 as the image information 413. When the candidate images identifier 405 also generates representations of the query frame 407 and the best matching images that are suitable as inputs for the potential paradigms executed within the paradigm execution section 403, the candidate images identifier 405 may also include the generated representations in the image information 413 provided to the paradigm execution section 403.

In certain embodiments, within the paradigm execution section 403, the processor 103 may receive a selection from a user through the user interface 115. Alternatively, the processor 103 may identify a particular paradigm based on the operational context of the object. In some implementations, the processor 103 may identify a particular paradigm based on a combination of user input and detected operational context. When the processor 103 identifies the paradigm to execute, the processor 103 then uses the provided image information 413 to perform the identified paradigm. Also, in some implementations, more than one paradigm can be selected for execution by the processor 103.

As illustrated, the paradigm execution section 403 includes multiple executable paradigms. In particular, the paradigm execution section 403 includes a first paradigm 415, a second paradigm 417, a third paradigm 419, a fourth paradigm 421, a fifth paradigm 423, and a sixth paradigm 425. While six paradigms are illustrated, the paradigm execution section 403 may potentially provide more optional paradigms or fewer paradigms. Each paradigm may provide various benefits. For example, some paradigms may be performed more quickly, some may provide better accuracy, and some may be more suitable for performance in certain operating environments.

In certain embodiments, some paradigms may identify the pose information for the object. In contrast, other paradigms may identify corresponding features between the query image and an image in the best-matching images provided as part of the image information 413. For example, as illustrated, the third paradigm 419, fourth paradigm 421, and fifth paradigm 423 provide examples of paradigms that identify corresponding features. When a paradigm identifies corresponding features, the paradigm may provide information about the corresponding features to a pose solver 427. The pose solver 427 may use the information about the corresponding features and information about the image sensor 101 to calculate the pose of the object associated with the navigation system 100.

In certain embodiments, the query frame 407 may be a two-dimensional image, and the image(s) in the best matching images from the image database 409 may contain three-dimensional data. From the correspondence of the two-dimensional image to the three-dimensional image based on the corresponding features, the pose of the object associated with the two-dimensional image can be determined using a perspective-n-point (PnP) algorithm (such as EPnP, SQPnP, and P3P). In particular, the processor 103, when using a PnP algorithm, solves the following problem for matching features:

$$\begin{bmatrix} u \\ v \\ 1 \end{bmatrix} = \begin{bmatrix} f_x & 0 & c_x \\ 0 & f_y & c_y \\ 0 & 0 & 1 \end{bmatrix} \begin{bmatrix} \tau_{11} & \tau_{12} & \tau_{13} & t_1 \\ \tau_{21} & \tau_{22} & \tau_{23} & t_2 \\ \tau_{31} & \tau_{32} & \tau_{33} & t_3 \end{bmatrix} \begin{bmatrix} X \\ Y \\ Z \\ 1 \end{bmatrix}$$

Where $\begin{bmatrix} u \\ v \\ 1 \end{bmatrix}$ is the observed pixel location, $\begin{bmatrix} f_x & 0 & c_x \\ 0 & f_y & c_y \\ 0 & 0 & 1 \end{bmatrix}$ are the known properties of the image sensor 101 that define the relation of the image sensor 101 to the object attached to the navigation system 100. Further, the $\begin{bmatrix} X \\ Y \\ Z \\ 1 \end{bmatrix}$ refers to the three-dimensional coordinates in the earth frame for the feature in the matching image associated with the observed pixel location. Using this data, the processor 103 can estimate $\begin{bmatrix} \tau_{11} & \tau_{12} & \tau_{13} & t_1 \\ \tau_{21} & \tau_{22} & \tau_{23} & t_2 \\ \tau_{31} & \tau_{32} & \tau_{33} & t_3 \end{bmatrix}$, which represents the pose of the object attached to the navigation system 100 in six degrees of freedom. In particular, $\begin{matrix} \tau_{11} & \tau_{12} & \tau_{13} \\ \tau_{21} & \tau_{22} & \tau_{23} \\ \tau_{31} & \tau_{32} & \tau_{33} \end{matrix}$ represents the roll, pitch, and yaw of the object and $\begin{matrix} t_1 \\ t_2 \\ t_3 \end{matrix}$ represents the position of the object in the reference frame used for the features in the matching image. Accordingly, the processor 103 may calculate the pose of the object in six degrees of freedom. When the processor 103 determines the pose of the object, the processor 103, another processor on the object, or a user can use the pose to direct the navigation of the attached object or use the pose information for other purposes.

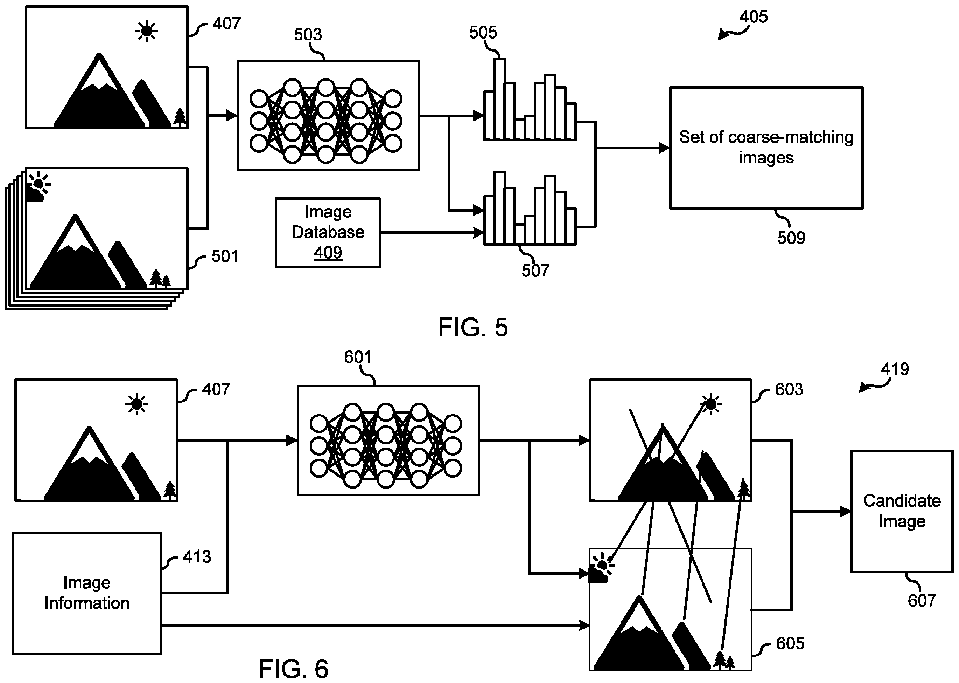

FIG. 5 is a diagram illustrating an exemplary embodiment of a coarse comparison of an acquired query frame 407 with a set of database images 501 in the image database 409 to identify a set of coarse-matching images 509. For example, the candidate images identifier 405 may acquire the query frame 407 from the image sensor 101 and a set of database images 501 from the image database 409. The candidate images identifier 405 may generate a general descriptor for the query frame 407 by providing the query frame 407 as an input to a coarse model 503. The coarse model 503 may function similarly to the coarse model 109 described above. Thus, in some implementations, the coarse model 503 may be a machine learning model that receives a frame of image data as an input and provides a column vector as an output. One such example of a machine learning model may be created using a residual neural network (ResNet), where a generalized mean-pooling (GeM) algorithm may be performed on the last layer of the ResNet, where the GeM is performed with the maximization of the average precision as an objective. Other algorithms for generating global descriptors, such as a triplet loss approach or other algorithms, may also be used. With a model that can generate descriptors, the coarse model 503 may receive the query frame 407 as an input and generate query general descriptors 505 as an output.

In certain embodiments, the candidate images identifier 405 may compare the query general descriptors 505 against the general descriptors 507 for the set of database images 501. In some implementations, the coarse model 503 may separately receive each image in the set of database images 501 as an input and generate a general descriptor for each image in the set of database images 501. In an alternative implementation, the general descriptors 507 for the set of database images 501 may be pre-calculated and stored in the image database 409. Thus, the candidate images identifier 405 may pull the stored general descriptors 507 for each image in the image database 409 from the image database 409.

In further embodiments, the query general descriptors 505 and the general descriptors 507 can be quickly compared to one another. For example, the same model used to generate the query general descriptors 505 may be used to generate the general descriptors 507. Alternatively, different models may be used to generate the query general descriptors 505 and the general descriptors 507, but the descriptors generated by the different models are still comparable with one another. In one such implementation having comparable descriptors, the query general descriptors 505 and the general descriptors 507 for each image in the set of database images 501 may be represented as a column vector of the same dimensions. Thus, the query general descriptors 505 may be quickly compared to the general descriptors 507 for a particular image in the set of database images 501 by taking the dot product of the query general descriptors 505 with the general descriptors 507 for the specific image. After the dot products have been calculated for the query general descriptors 505 with the general descriptors 507 for each image in the set of database images 501, the candidate images identifier 405 then identifies a defined number of images in the set of database images 501 having the highest resultant dot product as the set of coarse-matching images 509. The defined number of images may be predefined, tunable by a user, or depend on the operational context of the object associated with the navigation system 100. With the set of coarse-matching images 509, the candidate images identifier 405 may provide the set of coarse-matching images 509 to the paradigm execution section 403 as part of the image information 413, as described above. With the image information 413, the paradigm execution section 403 then provides the set of coarse-matching images 509 as an input to one or more of the selected vision localization paradigms.

FIG. 6 is a diagram illustrating an additional vision localization paradigm, such as the third vision localization paradigm 419. As illustrated, the third paradigm 419 may use landmark navigation to identify the pose of an object. In particular, the third paradigm 419 may use landmark navigation to identify a candidate image from the identified set of coarse-matching images 509 provided within the image information 413.

In certain embodiments, the third paradigm 419 may identify a candidate image 607 from the set of coarse-matching images 509 in the image information 413 that matches the query frame 407 based on local descriptors generated by a local descriptor model 601, which is included in the paradigm information 111 described above. For example, the third paradigm 419 may acquire the query frame 407 and provide the query frame 407 as an input to the local descriptor model 601 to generate query local descriptors 603. The local descriptor model 601 is an algorithm or other executable model that generates local descriptors for an image based on provided image data. Additionally, the third paradigm 419 may provide each image in the set of coarse-matching images 509 as an input to the local descriptor model 601 to identify database local descriptors 605 for each image in the set of coarse-matching images 509. The images in the set of coarse-matching images 509 may be provided as inputs to the local descriptor model 601. At the same time, the local descriptor model 601 generates the query local descriptors 603 to generate the database local descriptors 605. Alternatively, the database local descriptors 605 may be pre-computed by the system or another system, then stored in the image database 409. When the database local descriptors 605 are stored in the image database 409, the database local descriptors 605 may be provided for use by the third paradigm 419 as part of the image information 413. In alternative implementations, the database local descriptors 605 may be calculated by the candidate images identifier 405 and provided to the third paradigm 419 as part of the image information 413.

In some embodiments, the performance of the local descriptor model 601 by the third paradigm 419 may include performing a learning-based local descriptor identification algorithm. For example, the learning-based local descriptor algorithm is a deep-learning-based algorithm that extracts local descriptors (key points and descriptors) from images. Thus, each image in the set of coarse-matching images 509 and the query frame 407 may be provided as an input to the learning-based local descriptor algorithm executed as the local descriptor model 601 by the processor executing the third paradigm 419 or an external system. Accordingly, the learning-based local descriptor algorithm can produce local descriptors for the query frame 407 and each image in the set of coarse-matching images 509. Alternatively, the local descriptors for the query frame 407 can be generated using a different algorithm than the algorithm used to generate the local descriptors for the images in the set of coarse-matching images 509 as long as the descriptors generated by the different algorithms are comparable to one another.

In certain embodiments, the third paradigm 419 compares the query local descriptors 603 against the database local descriptors 605 for each image in the set of coarse-matching images 509 to identify a candidate image 607. For example, the system may provide the query local descriptors 603 and the database local descriptors 605 as inputs to an additional model that provides confidence metrics for putative matches between an image in the set of coarse-matching images 509 and the query frame 407. The system may sum the produced confidence metrics to identify a candidate image 607 from the set of coarse-matching images 509, where the candidate image 607 has the highest confidence metric sum.

In certain embodiments, to determine which database local descriptors 605 best match the query local descriptors 603, the third paradigm 419 may perform an attentional graphical neural network plus optimal matching layer. For example, the third paradigm 419 may perform the graphical neural network algorithm to compare the query local descriptors 603 with the database local descriptors 605 of each image in the set of coarse-matching images 509. Further, the graphical neural network algorithm may additionally be performed for different orientations and sizes of the different coarsely matching images to account for different orientations of the object in relation to the environment and distances from surfaces in the environment. A graphical neural network algorithm may refer to a deep learning-based algorithm that performs feature matching and geometric verification. The graphical neural network algorithm takes the local descriptors from the different images and uses graph neural networks to match the local descriptors. The graphical neural network algorithm produces confidence metrics for the putative matches. The third paradigm 419 may sum up the produced confidence metrics to identify a candidate image from the set of coarse-matching images 509.

In some embodiments, when the third paradigm 419 has identified a candidate image 607, the third paradigm 419 may provide information regarding the corresponding features in the candidate image 607 and the query frame 407, along with information describing the characteristics of the image sensor 101 to the pose solver 427. As described above, the pose solver 427 may calculate the pose of an object using a PNP or other algorithm based on the correspondence between the identified features in the query frame 407 and the candidate image 607.

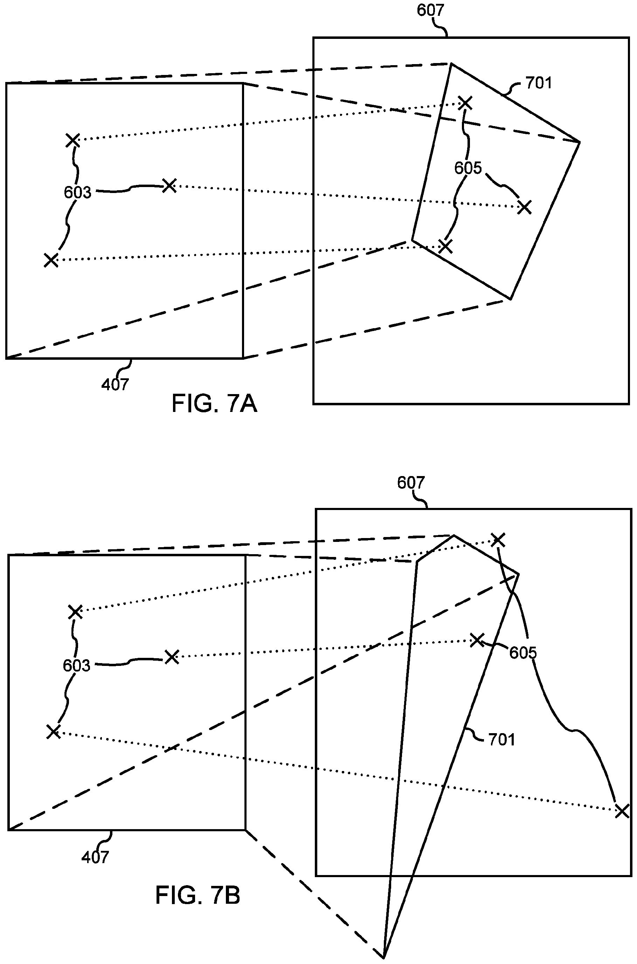

However, in some situations, the third paradigm 419 may identify an incorrect candidate image 607. Thus, the third paradigm 419 may perform a validity check to determine whether an identified candidate image 607 is valid before providing the information to the pose solver 427. FIGs. 7A and 7B illustrate the application of a validity check to a candidate image 607. In particular, FIG. 7A illustrates the application of a homography matrix to a query frame 407 that maps the query frame 407 onto a valid candidate image 607, and FIG. 7B illustrates the application of a homography matrix to a query frame 407 that maps the query frame onto an invalid candidate image.

As stated, FIG. 7A illustrates the application of a validity check to a candidate image 607. When performing the validity check, a system may identify a homography matrix based on at least some of the query local descriptors 603 and the database local descriptors 605. The system may use the identified homography matrix to create a mapping 701 of the boundaries of the query frame 407 onto the candidate image 607. After creating the mapping 701, the system may use the homography matrix to map the query local descriptors 603 onto the candidate image 607. As shown in FIG. 7A, when the homography matrix is applied to the query local descriptors 603, the query local descriptors 603 map to database local descriptors 605 within the mapping 701. Because the mapped database local descriptors 605 are located within the mapping 701, the candidate image 607, in FIG. 7A, passes the validity check, and the candidate image 607 is designated as a matching image.

In contrast, in FIG. 7B, where a similar mapping 701 is created from a homography matrix, some of the query local descriptors 603 map to database local descriptors 605 outside the mapping 701. As the query local descriptors 603 map to database local descriptors 605 outside the mapping 701, the candidate image 607 in FIG. 7B fails the validity check. In some implementations, the candidate image 607 may fail the validity check when any query local descriptors 603 map to database local descriptors 605 outside the mapping 701. However, the candidate image 607 may fail the validity check when a certain number or proportion of the query local descriptors 603 map to database local descriptors 605 outside the mapping 701.

Additionally, a candidate image 607 may fail the validity check when the mapping 701 created from the homography matrix represents an impossible potential mapping 701 of the query frame 407 onto the candidate image 607. For example, the mapping 701 may be an extreme non-rectangular or garbled mapping. When the mapping 701 is an impossible mapping, the garbled mapping or irregular shape may indicate that the homography-matrix resulting from the local descriptors is invalid. Thus, the candidate image 607 is a false match for the query frame 407. When the third paradigm 419 determines that the candidate image 607 is a false match, the third paradigm 419 may select the next best matching image in the set of coarse-matching images 509 that can pass the validity check.

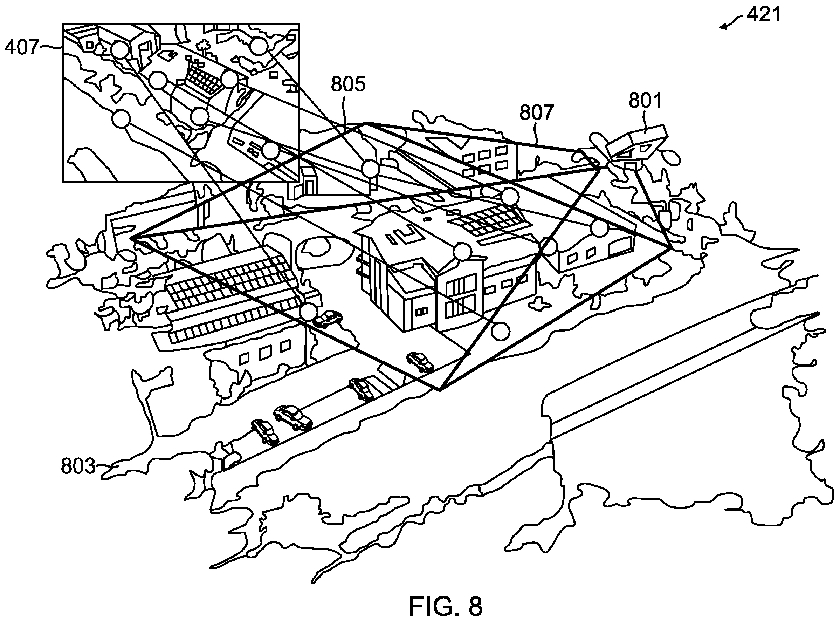

FIG. 8 is a diagram illustrating a vision localization paradigm, such as the fourth vision localization paradigm 421. As illustrated, the fourth paradigm 421 may use structures from motion (SfM) algorithms to identify the pose of an object. In an SfM paradigm, a processor may compute a frame of three-dimensional information 803 from a sequence of two-dimensional images acquired from a moving image capture device like a camera moving through an environment. The three-dimensional information may then be saved on the image database 409. The three-dimensional information may then be provided to the coarse model 503 to calculate general descriptors for a set of information. The image database 409 may contain multiple frames of three-dimensional information from which the set of coarse-matching images 509 can be selected.

In certain embodiments, a frame of three-dimensional information can be selected from the set of coarse-matching images 509. Similarly to the third paradigm 419 described above, a candidate image may be selected based on the local descriptors of the query frame 407 compared to identified local descriptors of the three-dimensional information 803.

Within an SFM paradigm, the computational intensity of creating three-dimensional information increases as the area represented within the frame of three-dimensional information 803 becomes larger. For example, representing a home or groups of homes within the frame of three-dimensional information 803 may be a feasible task for a computational device. However, representing a city or a larger region within the frame of three-dimensional information 803 becomes computationally out of reach for many supercomputers. Thus, the SFM paradigm may be more suitable for smaller, predominately three-dimensional environments.

In exemplary embodiments, a vehicle 801, having a navigation system 100 mounted thereon, may move through an environment and capture the query frame 407. As discussed above, the navigation system 100 may identify a set of coarse-matching images 509 in the image database 409 that potentially correspond with the query frame 407. With the identified set of coarse-matching images 509, the navigation system 100 may identify local descriptors in the set of coarse-matching images 509 and local descriptors in the set of coarse-matching images 509. The local descriptors may describe features represented in the query frame 407 and the set of coarse-matching images 509. The local descriptors provide information about features within the set of coarse-matching images 509. The navigation system 100 may then identify a frame of three-dimensional information 803 that most closely matches the query frame 407.

In certain embodiments, using corresponding features in the query frame 407 and the three-dimensional information 803, the navigation system 100 may identify a mapping 805. The mapping 805 may be a mapping of the boundaries of the query frame 407 to the three-dimensional information 803. Alternatively, the mapping 805 may correspond to the mapping of the features of the query frame 407 to corresponding features in the frame of three-dimensional information 803.

In exemplary embodiments, the mapping 805 may depend on the perspective 807 of the image sensor 101 of the navigation system 100, which is mounted to a vehicle 801. By knowing the perspective 807, the navigation system 100 may determine the pose of the vehicle 801 in relation to the features identified in the frames of three-dimensional information 803, which have known positions. However, the perspective 807 depends on characteristics of the image sensor 101 that captured the query frame 407, which characteristics are known a priori. Thus, the navigation system 100 may use information regarding the characteristics of the image sensor 101 and the identified corresponding features in the query frame 407 and in the frame of three-dimensional information 803 to calculate the perspective 807 of the image sensor 101. Thus, the information about corresponding features and the information of the characteristics of the image sensor 101, may be provided to the pose solver 427, which pose solver 427 uses the information to calculate the pose as described above. Thus, the fourth paradigm 421 can perform vision localization using image retrieval from an image database 409.

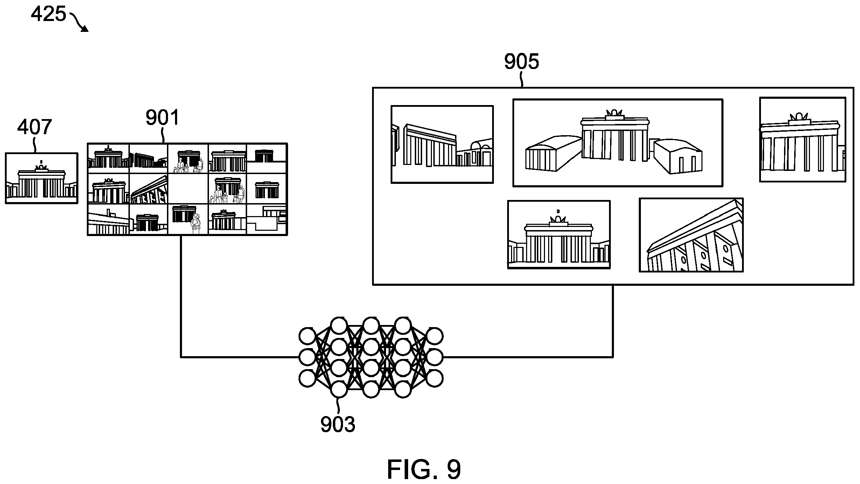

FIG. 9 is a diagram illustrating an additional vision localization paradigm, such as the sixth vision localization paradigm 425. As illustrated, the sixth paradigm 425 may use neural rendering to identify the pose of an object. Neural rendering is an image and video generation technique that uses machine learning to generate new images based on acquired images. In the context of vision localization, neural rendering can implement a machine learning algorithm 903 to generate two and three-dimensional representations 905 of a scene based on a set of previously acquired images 901. The generated representations 905 may be stored in the image database 409 for retrieval by the navigation system 100 when performing vision localization. In particular, the navigation system 100 may acquire a query frame 407 from an image sensor 101 and identify the pose of the image sensor 101 within an environment.

Using neural rendering can provide some benefits. For example, neural rendering can capture three-dimensional representations of scenes that are difficult or impossible for traditional image-capturing methods to capture. There are several advantages to using neural rendering for vision localization. First, it can create three-dimensional representations of scenes that are difficult or impossible to capture with traditional image-capturing methods. For example, neural rendering can create three-dimensional representations of indoor or constantly changing scenes, such as busy streets. Additionally, neural rendering can be used to create more detailed three-dimensional representations because the neural network machine learning algorithm 903 can learn to represent the appearance of objects at fine levels. Fine detailed three-dimensional representations can be useful for vision localization, which can help improve the accuracy of camera pose estimations.

However, like the other paradigms, neural rendering also potentially has drawbacks. In particular, the quality of the model produced by the algorithm 903 depends on the quality of the training data. A poor quality training set may create poor quality generated representations. Also, the algorithm 903 may be computationally intensive. Thus, the execution of the algorithm 903 may require supercomputers or other large computers to generate the desired representations.

For neural rendering, the paradigm information 111 implemented on the system 200 described above in FIG. 2 may include instructions that direct the processor 227 to implement the algorithm 903 on a set of previously acquired images 901 from the image source 221. The algorithm 903 may be trained on quality training data, so the algorithm 903 may generate similar quality representations. With the generated model algorithm 903, the set of previously acquired images 901 may be provided as an input to the algorithm 903. The set of previously acquired images 901 may be multiple two-dimensional or three-dimensional data acquired from a particular scene. From the input, the algorithm 903 generates a set of two- and three-dimensional representations 905 that the navigation system 100 may use to compare against a potential query frame 407. The set of two- and three-dimensional representations 905 may be loaded into the image database 409 on the navigation system 100.

In certain embodiments, when an image sensor 101 on the navigation system 100 acquires a query frame 407, the navigation system 100 may identify the set of coarse-matching images 509. With the identified set of coarse-matching images 509, the query frame 407 and the two and three-dimensional representations 905 may be provided as an input to the algorithm 903, which can determine the pose of the camera based on a modeled relationship of the query frame 407 to the two- and three-dimensional representations 905. Additionally, characteristics of the image sensor 101 may be provided as an input to the algorithm 903.

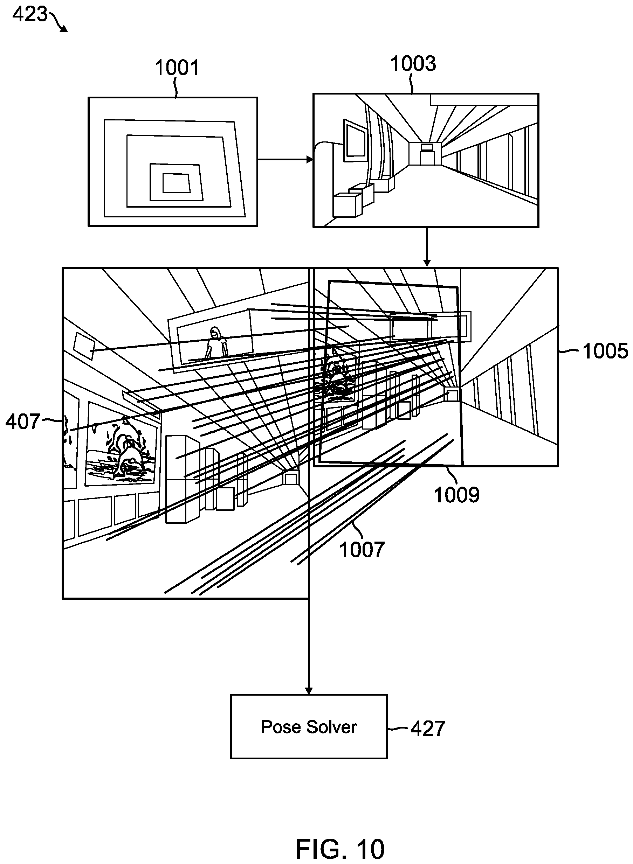

FIG. 10 is a diagram illustrating an additional vision localization paradigm, such as the fifth vision localization paradigm 423. As illustrated, the fifth paradigm 423 may use learned depth vision localization to identify the pose of an object. Learned depth vision localization is a technique that uses deep learning to estimate the camera pose of a query frame 407 by learning the relationship between depth and image features. Learned depth vision localization can constrain the possible poses of image sensors 101 that could have captured the image of an object. For example, if an image represents an object known to be one meter tall, then the image constrains the image sensor 101 to positions that could have captured the image of the object.

As stated, deep learning can be used to learn relationships between depth and image features. To train a model, a deep neural network may be used on datasets of images 1003 and their corresponding depth maps 1001. As the model is trained, the neural network learns to predict the depth of objects in an image from the image features. Once the neural network is sufficiently trained, the neural network can be used to estimate the camera pose of a query frame 407.

The learned depth vision localization paradigm provides some advantages and disadvantages like the other paradigms described herein. For example, because learned depth vision localization uses depth information, it can be well suited for challenging environments subject to lighting conditions and clutter changes. In particular, the depth information can compensate for changes in the appearance of scenes and help disambiguate different objects within the scenes. Also, if the produced model is trained on data from a wide variety of environments, the model may be able to generalize to new environments, making learned depth vision localization well-suited for localization in new environments. However, learned depth vision localization relies on realistic and diverse training data and can be computationally expensive to train the model and analyze acquired frames of data. Further, models produced using learned depth vision localization may be subject to errors when there is noise in the depth information.

In certain embodiments, learned depth algorithms can estimate the pose of an image sensor 101 by identifying features corresponding to images having known depth retrieved from the image database 409. In particular, the set of coarse-matching images 509 may have been previously processed with a deep learning neural network to estimate depth information for the features in the set of coarse-matching images 509. Using the set of coarse-matching images 509, the navigation system 100 may compare the query frame 407 to the images in the set of coarse-matching images 509 to identify a candidate image 1005 in the set of coarse-matching images 509. For example, the navigation system 100 may compare local descriptors of features in the query frame 407 with local descriptors of features for each image in the set of coarse-matching images 509. Based on the comparison, the navigation system 100 may identify the candidate image 1005 as the image in the set of coarse-matching images 509 having a highest matching measure, where a matching measure may be a summation of the matching scores between the features in the query frame 407 and the images in the set of coarse-matching images 509.

In certain embodiments, using corresponding features 1007 in the query frame 407 and the candidate image 1005, the navigation system 100 may identify a mapping 1009. The mapping 1009 may be a map of the boundaries of the query frame 407 to the candidate image 1005. Further, the mapping 1009 may be derived from the mapping of the corresponding features 1007 between the query frame 407 and the candidate image 1005.

In exemplary embodiments, the mapping 1009 may depend on the pose of the image sensor 101 of the navigation system 100, which is mounted to an object in the environment. By knowing the corresponding features 1007, the navigation system 100 may determine the pose of the object within the environment using the learned depth information of the corresponding features in the candidate image 1005 and their appearance in the query frame 407. Thus, the navigation system 100 may use information regarding the characteristics of the image sensor 101 and the identified corresponding features 1007 in the query frame 407 and in the candidate image to calculate the pose of the image sensor 101. Thus, the information about corresponding features 1007 and the information about the characteristics of the image sensor 101 may be provided to the pose solver 427, which pose solver 427 uses the information to calculate the pose as described above. Thus, the fifth paradigm 423 may also be able to perform vision localization using image retrieval from an image database 409.

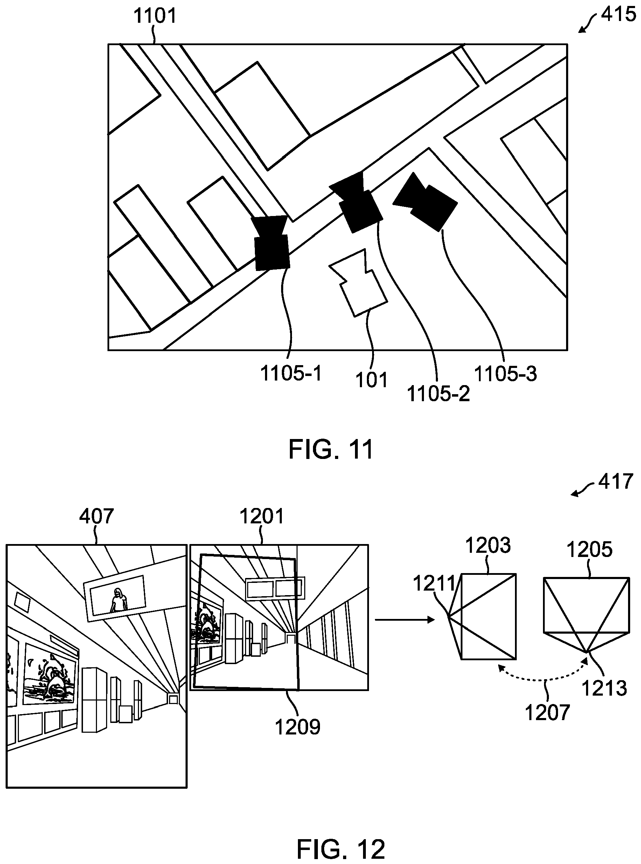

FIG. 11 is a diagram illustrating an additional vision localization paradigm, such as the first vision localization paradigm 415. As illustrated, the first paradigm 415 may use pose approximation vision localization to identify the pose of an object. Pose approximation vision localization is a technique for estimating the pose of an image sensor 101 by finding an image or combination of images having known poses that most closely matches a query frame 407 produced by the image sensor 101. Pose approximation relies on the assumption that every scene is unique. Thus, if a scene represented in an image in the image database 409 matches the scene represented in the query frame 407 captured by the image sensor 101, then the pose of the image sensor 101 must match the pose of the image capture device that acquired the matching image in the image database 409.

In exemplary embodiments, the image sensor 101 on the navigation system 100 may acquire a query frame 407 representing a scene of the environment 1101. As discussed above, the navigation system 100 includes an image database 409 that stores multiple captured images representing different scenes within the environment 1101, where the pose of the image capturing devices 1105-1-1105-3, that captured the scenes represented in the image database 409, is known. For example, the image database 409 may include images of different scenes acquired by the different image-capturing devices 1105-1-1105-3, where the pose of the different image-capturing devices 1105-1-1105-3 is known at the time the different image capturing devices 1105-1-1105-3 captured the images. When the navigation system 100 receives the query image and the set of coarse-matching images 509, the navigation system 100 may identify the image in the set of coarse-matching images 509 that is most similar to the query frame 407 captured by the image sensor 101. The navigation system 100 may then determine that the pose of the image sensor 101 is the pose of the image capturing device 1105 that captured the closest image in the set of coarse-matching images 509. For instance, the navigation system 100 may determine that the image in the set of coarse-matching images 509 created by the image capturing device 1105-2 is closest to the query frame 407. Thus, the navigation system 100 will determine that the pose of the image sensor 101 is the same as that of the image-capturing device 1105-2.

In some implementations, the navigation system 100 may determine the pose based on a combination of the poses of the different image-capturing devices 1105-1-1105-3 that captured the scenes represented in the images in the set of coarse-matching images 509. For example, the navigation system 100 may calculate weights for each image in the set of coarse-matching images 509, where a weight represents the similarity of the query frame 407 to a particular image in the set of coarse-matching images 509. The pose of the image sensor 101 may then be calculated for a particular dimension by summing the weights applied to the poses of the associated image-capturing devices 1105-1-1105-3. For example, the pose of the image sensor 101 may be calculated using the following equation:

$$\sum_{i=1}^{k} w_i \mathbf{T}_i.$$

As shown, the pose along a particular dimension can be calculated as the summation of the weight w multiplied by the pose T for each sensor $i$ associated with an image retrieved from the image database 409.

The pose approximation vision localization paradigm provides some advantages and disadvantages like the other paradigms described herein. For example, pose approximation is relatively simple and computationally efficient, making it suitable for situations with limited processing resources or rapid pose calculations. Also, it is less sensitive to occlusion and offers scalability to different levels of accuracy. However, pose approximation has some disadvantages because it does not consider a full three-dimensional structure of a scene. For example, pose approximation may not be as accurate as other vision localization paradigms described herein. Further, pose approximation is more sensitive to changes in an environment.

FIG. 12 is a diagram illustrating an additional vision localization paradigm, such as the second vision localization paradigm 417. As illustrated, the second paradigm 417 may use two-view geometry vision localization to identify the pose of an object. Two-view geometry vision localization is a technique that uses the geometric relationships between two images of the same scene to estimate the pose of an image sensor 101. For example, the navigation system 100 may use epipolar geometry to create a homography matrix describing the transformation of the query frame 407 to a candidate image 1201 in the set of coarse-matching images 509.

As described herein, homography describes changes that occur to the perceived positions of objects when the point of view of an image acquisition device changes. In particular, the change in point of view distorts the perceived positions of the object. Homographic techniques identify points in common between different image projections, like the image projection in the query frame 407 and the candidate image 1201. Epipolar geometry allows homography to relate any two images of the same planar surface, which permits the estimation of a homography matrix. With this knowledge of the homography matrix, the navigation system 100 may identify a mapping 1209 of the query frame 407 onto the candidate image 1201. Using the mapping 1209, homography matrix, and knowledge of the pose of the sensor that originally captured the candidate image 1201, the navigation system 100 can calculate the position of the image sensor.

To further illustrate, a first image 1203 of a scene is captured by an image sensor located at the first position 1211, where the first position 1211 is known. A second image sensor may capture a second image 1205 of the scene at an unknown second position 1213. A processor executing two-view geometry vision localization may identify corresponding points and surfaces in the first image 1203 and the second image 1205. Using this information, the processor can identify a transformation 1207, which describes the translation and rotation of an image sensor that moved from the first position 1211 to the second position 1213 and vice versa. Thus, using the transformation 1207 and knowledge of the first position 1211, the processor can estimate the pose of the second image sensor at the second position 1213.

In certain embodiments, the navigation system 100 may identify a candidate image 1201 from the set of coarse-matching images 509. After identifying the candidate image 1201, the navigation system 100 may use the two-view geometry vision localization paradigm to identify a transformation of the query frame 407 onto a position representing the location of an image acquisition device that acquired the candidate image 1201. The navigation system 100 then uses the identified transformation and the position associated with the candidate image 1201 to calculate the pose of the image sensor 101 that acquired the query frame 407. Further, the navigation system 100 may identify the pose of an attached object using the lens characteristics of the image sensor 101. Two-view geometry vision localization provides several advantages, including its simple implementation and accuracy within constrained environments. However, two-view geometry vision localization is noise-sensitive and relies on observing planar surfaces within corresponding scenes.

While the following vision localization paradigms are described above, the navigation system 100 may also select from other available vision localization paradigms. Examples of vision localization paradigms include deep-feature matching, pose graph optimization, geolocation-based vision localization, visual simultaneous localization and mapping (VSLAM), visual-inertial odometry (VIO), active vision localization, and feature-based vision localization. Further, developing vision and processing technology may lead to new vision localization paradigms. New vision localization paradigms may easily be incorporated into the embodiments described herein. In particular, the navigation system 100 may select a new paradigm based on the top-selected images. Further, as processing capabilities improve, the number of selected images provided to the selected paradigm may also increase.

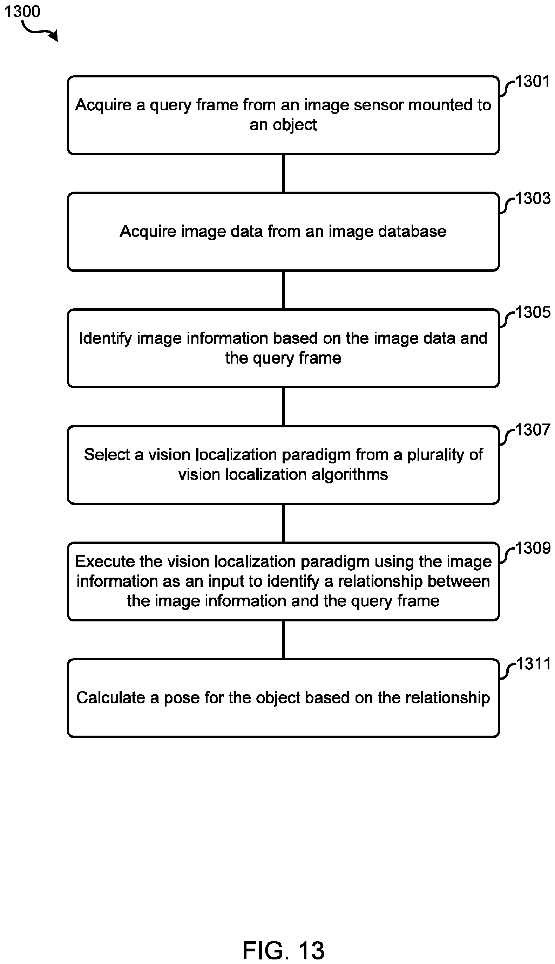

FIG. 13 is a flowchart diagram of a method 1300 for implementing a unified vision localization architecture. The method 1300 proceeds at 1301, where a query frame is acquired from an image sensor mounted to an object. The method 1300 further proceeds at 1303, where image data is acquired from an image database. Additionally, the method 1300 proceeds at 1305, where image information is identified based on the image data and the query frame. Moreover, the method 1307 proceeds at 1300, where a vision localization paradigm is selected from a plurality of vision localization algorithms. Also, the method proceeds at 1309, where the vision localization paradigm is executed using the image information as an input to identify a relationship between the image information and the query frame. Further, the method 1300 proceeds at 1311, where a pose is calculated for the object based on the relationship.

*Example Embodiments*

Example 1 includes a system comprising: an image acquisition device mounted to an object, the image acquisition device configured to acquire a query frame of an environment containing the object; a memory device configured to store an image database; and at least one processor configured to execute computer-readable instructions that direct the at least one processor to: identify a set of data in the image database that potentially matches the query frame; identify a vision localization paradigm in a plurality of vision localization paradigms; and determine a pose for the object using the set of data, the query frame, and lens characteristics for the image acquisition device as inputs to the vision localization paradigm.

Example 2 includes the system of Example 1, wherein the computer-readable instructions that direct the at least one processor to identify the set of data, further direct the at least one processor to: calculate a query general descriptor for the query frame; acquire general descriptors for a plurality of frames stored in the image database; compare the general descriptors to the query general descriptor for each of the plurality of frames; and designate a number of frames in the plurality of frames as the set of data.

Example 3 includes the system of Example 2, wherein the computer-readable instructions that direct the at least one processor to identify the set of data, further direct the at least one processor to provide additional paradigm-specific information for the number of frames included in the set of data.

Example 4 includes the system of any of Examples 1-3, further comprising a user interface, wherein the computer-readable instructions that direct the at least one processor to identify the vision localization paradigm, further direct the at least one processor to receive a paradigm selection from the user interface.

Example 5 includes the system of any of Examples 1-4, further comprising additional sensors, wherein the computer-readable instructions that direct the at least one processor to identify the vision localization paradigm, further direct the at least one processor to detect an operational context for the object based on navigational information acquired from the additional sensors.

Example 6 includes the system of Example 5, wherein the operational context includes at least one of: desired accuracy; whether the environment is a two-dimensional or three-dimensional environment; and available processing capabilities.

Example 7 includes the system of any of Examples 1-6, wherein data stored on the image database is received from a central repository, wherein the data stored on the image database was calculated by a plurality of processors at the central repository.

Example 8 includes the system of any of Examples 1-7, wherein the vision localization paradigm is at least one of: a pose approximation vision localization paradigm; a two-view geometry vision localization paradigm; a landmark navigation vision localization paradigm; a structures from motion vision localization paradigm; a learned depth vision localization paradigm; and a neural rendering vision localization paradigm.

Example 9 includes a method comprising: acquiring a query frame from an image sensor mounted to an object; acquiring image data from an image database; identifying image information based on the image data and the query frame; selecting a vision localization paradigm from a plurality of vision localization algorithms; executing the vision localization paradigm using the image information as an input to identify a relationship between the image information and the query frame; and calculating a pose for the object based on the relationship.

Example 10 includes the method of Example 9, wherein acquiring the image data from the image database further comprises: calculating a query general descriptor for the query frame; acquiring database general descriptors for a plurality of frames stored in the image database; comparing the database general descriptors to the query general descriptor for each of the plurality of frames; and designating a number of frames in the plurality of frames as the image data.

Example 11 includes the method of Example 10, wherein identifying the image information further comprises identifying additional paradigm specific information for the number of frames included in the image data.

Example 12 includes the method of any of Examples 9-11, wherein selecting the vision localization paradigm further comprises receiving a paradigm selection from a user interface.

Example 13 includes the method of any of Examples 9-12, wherein selecting the vision localization paradigm further comprises identifying operational context for the object based on information acquired from at least one sensor.

Example 14 includes the method of Example 13, wherein the operational context includes at least one of: desired accuracy; whether an environment for the object is a two-dimensional or three-dimensional environment; and available processing capabilities.

Example 15 includes the method of any of Examples 9-14, further comprising receiving data stored on the image database from a central repository, wherein the data stored on the image database was calculated by a plurality of processors at the central repository.

Example 16 includes the method of any of Examples 9-15, wherein the vision localization paradigm is at least one of: a pose approximation vision localization paradigm; a two-view geometry vision localization paradigm; a landmark navigation vision localization paradigm; a structures from motion vision localization paradigm; a learned depth vision localization paradigm; and a neural rendering vision localization paradigm.

Example 17 includes a system comprising: an image sensor configured to acquire a query frame representing a scene in an environment of an object having the image sensor mounted thereon; a memory device configured to store an image database; and at least one processor configured to execute computer-readable instructions that direct the at least one processor to: execute a common frontend that is configured to: receive the query frame from the image sensor; identify image information that includes a set of data acquired from the image database and the query frame; and provide the image information as an output; and execute a paradigm execution section that is configured to: receive the image information from the common frontend; identify a vision localization paradigm in a plurality of possible vision localization paradigm; execute the vision localization paradigm to identify a relationship between the query frame and the set of data; and calculate a pose of the object based on the relationship.

Example 18 includes the system of Example 17, wherein data stored on the image database is received from a central repository, wherein the central repository comprises: a plurality of processors; a repository image database storing a repository of image data acquired from a third party; and a transceiver for providing the data stored on the image database; wherein the plurality of processors executes a plurality of algorithms using a portion of the repository of the image data to create information that supports vision localization in the plurality of possible vision localization paradigms.

Example 19 includes the system of any of Examples 17-18, further comprising a user interface, wherein the paradigm execution section is configured to identify the vision localization paradigm by receiving a paradigm selection through the user interface.

Example 20 includes the system of any of Examples 17-19, wherein the vision localization paradigm is at least one of: a pose approximation vision localization paradigm; a two-view geometry vision localization paradigm; a landmark navigation vision localization paradigm; a structures from motion vision localization paradigm; a learned depth vision localization paradigm; and a neural rendering vision localization paradigm.

Although specific embodiments have been illustrated and described herein, it will be appreciated by those of ordinary skill in the art that any arrangement, which is calculated to achieve the same purpose, may be substituted for the specific embodiments shown. Therefore, it is manifestly intended that this invention be limited only by the claims and the equivalents thereof.

**Claims**

1. A system comprising:

    an image acquisition device mounted to an object, the image acquisition device configured to acquire a query frame of an environment containing the object;
    a memory device configured to store an image database; and
    at least one processor configured to execute computer-readable instructions that direct the at least one processor to:

        identify a set of data in the image database that potentially matches the query frame;
        identify a vision localization paradigm in a plurality of vision localization paradigms; and
        determine a pose for the object using the set of data, the query frame, and lens characteristics for the image acquisition device as inputs to the vision localization paradigm.

2. The system of claim 1, wherein the computer-readable instructions that direct the at least one processor to identify the set of data, further direct the at least one processor to:

    calculate a query general descriptor for the query frame;
    acquire general descriptors for a plurality of frames stored in the image database;
    compare the general descriptors to the query general descriptor for each of the plurality of frames; and
    designate a number of frames in the plurality of frames as the set of data.

3. The system of claim 1, further comprising a user interface, wherein the computer-readable instructions that direct the at least one processor to identify the vision localization paradigm, further direct the at least one processor to receive a paradigm selection from the user interface.

4. The system of claim 1, further comprising additional sensors, wherein the computer-readable instructions that direct the at least one processor to identify the vision localization paradigm, further direct the at least one processor to detect an operational context for the object based on navigational information acquired from the additional sensors.

5. The system of claim 1, wherein the vision localization paradigm is at least one of:

    a pose approximation vision localization paradigm;

a two-view geometry vision localization paradigm;
a landmark navigation vision localization paradigm;
a structures from motion vision localization paradigm;
a learned depth vision localization paradigm; and
a neural rendering vision localization paradigm.

6. A method comprising:

acquiring a query frame from an image sensor mounted to an object;
acquiring image data from an image database;
identifying image information based on the image data and the query frame;
selecting a vision localization paradigm from a plurality of vision localization algorithms;
executing the vision localization paradigm using the image information as an input to identify a relationship between the image information and the query frame; and
calculating a pose for the object based on the relationship.

7. The method of claim 6, wherein acquiring the image data from the image database further comprises:

calculating a query general descriptor for the query frame;
acquiring database general descriptors for a plurality of frames stored in the image database;
comparing the database general descriptors to the query general descriptor for each of the plurality of frames; and
designating a number of frames in the plurality of frames as the image data.

8. The method of claim 6, wherein selecting the vision localization paradigm further comprises receiving a paradigm selection from a user interface.

9. The method of claim 6, wherein selecting the vision localization paradigm further comprises identifying operational context for the object based on information acquired from at least one sensor.

10. The method of claim 6, further comprising receiving data stored on the image database from a central repository, wherein the data stored on the image database was calculated by a plurality of processors at the central repository.

FIG. 1

FIG. 2

300

301 — Acquire Image Data from Database

303 — Acquire Query Frame from Image Sensor

305 Select Set of Coarsely-Matched Images

307 — Select Pose Paradigm Based on Operational Context

309 — Calculate Pose of Object Using the Selected Pose Paradigm

FIG. 3

FIG. 4

400

401 403

407 Query Image

409 Image Database

405 Candidate Images Identifier

411 Model Information

413 Image Information

415 First Paradigm

417 Second Paradigm

419 Third Paradigm

421 Fourth Paradigm

423 Fifth Paradigm

425 Sixth Paradigm

427 Pose Solver

FIG. 5

FIG. 6

EP 4 517 262 A1

FIG. 7A

FIG. 7B

FIG. 8

FIG. 9

EP 4 517 262 A1

423

1001

1003

407

1005

1009

1007

Pose Solver 427

FIG. 10

FIG. 11

FIG. 12

1300

Acquire a query frame from an image sensor mounted to an object ⌐1301

Acquire image data from an image database ⌐1303

Identify image information based on the image data and the query frame ⌐1305

Select a vision localization paradigm from a plurality of vision localization algorithms ⌐1307

Execute the vision localization paradigm using the image information as an input to identify a relationship between the image information and the query frame ⌐1309

Calculate a pose for the object based on the relationship ⌐1311

FIG. 13

Europäisches
Patentamt

European
Patent Office

Office européen
des brevets

# EUROPEAN SEARCH REPORT

**Application Number**

EP 24 19 3638

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 884 834 A (HUAWEI TECH CO LTD) 1 June 2021 (2021-06-01) * the whole document * ----- | 1-10 | INV. G01C21/20 G06T7/73 |
| X | US 2020/008024 A1 (HU SI YING DIANA [US] ET AL) 2 January 2020 (2020-01-02) * paragraphs [0025] - [0031]; claims 1,2 * ----- | 1,6 | |

**TECHNICAL FIELDS SEARCHED (IPC)**

G01C
G06T

The present search report has been drawn up for all claims

| Place of search | Date of completion of the search | Examiner |
|---|---|---|
| The Hague | 14 January 2025 | Pascheka, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 3638

This annex lists the patent family members relating to the patent documents cited in  the above-mentioned European search report.
The members are as contained in the European Patent Office EDP file on
The European Patent Office is in no way liable for these particulars which are merely given for the purpose of information.

14-01-2025

| Patent document cited in search report | | Publication date | Patent family member(s) | | Publication date |
|---|---|---|---|---|---|
| CN 112884834 | A | 01-06-2021 | NONE | | |
| US 2020008024 | A1 | 02-01-2020 | AU | 2019291869 A1 | 18-02-2021 |
| | | | AU | 2021203410 A1 | 24-06-2021 |
| | | | AU | 2022256192 A1 | 24-11-2022 |
| | | | CA | 3104532 A1 | 02-01-2020 |
| | | | CN | 112334953 A | 05-02-2021 |
| | | | CN | 115311422 A | 08-11-2022 |
| | | | EP | 3815398 A1 | 05-05-2021 |
| | | | JP | 6931138 B1 | 01-09-2021 |
| | | | JP | 7361075 B2 | 13-10-2023 |
| | | | JP | 2021524636 A | 13-09-2021 |
| | | | JP | 2022000761 A | 04-01-2022 |
| | | | KR | 20210013655 A | 04-02-2021 |
| | | | KR | 20210154861 A | 21-12-2021 |
| | | | US | 2020008024 A1 | 02-01-2020 |
| | | | US | 2020367034 A1 | 19-11-2020 |
| | | | US | 2021105593 A1 | 08-04-2021 |
| | | | WO | 2020006299 A1 | 02-01-2020 |

EPO FORM P0459

For more details about this annex : see Official Journal of the European Patent Office, No. 12/82

**REFERENCES CITED IN THE DESCRIPTION**

**Patent documents cited in the description**

- IN 202311058474